# EUROPÄISCHE PATENTANMELDUNG

(11) **EP 1 136 734 A1**
(43) Veröffentlichungstag der Anmeldung: **26.09.2001**
(21) Anmeldenummer: 00106202.5
(22) Anmeldetag: 22.03.2000
(51) Int. Cl.: F16J 15/10, F16J 15/12, F16L 23/18, F16L 23/22

(54) **Dichtung, insbesondere Flanschdichtung**

(71) Anmelder: Kroll & Ziller GmbH & Co. KG, 40721 Hilden (DE)
(72) Erfinder:
(74) Vertreter: Stenger, Watzke & Ring Patentanwälte

(57) **Zusammenfassung**

Eine Dichtung und insbesondere Flanschdichtung für Flanschverbindungen an Rohrleitungen oder Apparaten besteht aus einem Grundkörper aus Gummi oder elastomerem Kunststoff und einer in dem Grundkörper angeordneten Verstärkung. Um eine Dichtung mit hoher Belastbarkeit bei gutem Formänderungsverhalten im Mikrobereich zu schaffen, ist die Verstärkung ein in das Material des Grundkörpers (5) vorzugsweise durch Vulkanisieren eingebetteter Wellring (8). Das Material des Grundkörpers (5) füllt die Wellentäler (6) des Wellrings (8) vollständig aus, und überdeckt die Wellenberge (7) vollständig.

## Beschreibung

Die Erfindung betrifft eine Dichtung, insbesondere Flanschdichtung für Flanschverbindungen an Rohrleitungen oder Apparaten, bestehend aus einem Grundkörper aus Gummi oder elastomerem Kunststoff und einer in dem Grundkörper angeordneten Verstärkung.

Im Stand der Technik bekannt sind im Krafthauptschluß zwischen den abzudichtenden Flanschen angeordnete Dichtungen aus massivem Gummi mit rechteckförmigem Querschnitt. Solche Dichtungen können auch verstärkende Einlagen aus Metall aufweisen. Die Verstärkung dient der Versteifung der Dichtung, damit sich diese besser handhaben und montieren läßt. Hingegen erhöht die Metallverstärkung nicht die zulässige Flächenpressung und damit die Tragkraft der Dichtung, da die Schraubenkraft den Gummiquerschnitt direkt belastet und dabei verformt. Der dichtende Gummianteil und der versteifende Metallanteil liegen aus diesem Grunde auch hintereinander geschaltet im Kraftfluß. Diese Dichtungsart ist preiswert und deshalb weit verbreitet. Für hohe Druckstufen ist sie allerdings nur eingeschränkt geeignet.

Des weiteren bekannt sind Dichtungen mit Kraftnebenschluß, die einen zumeist innenliegenden Dichtabschnitt sowie einen außen angeordneten, die Druckkraft der abzudichtenden Flansche aufnehmenden Abschnitt aufweisen. Eine solche Dichtung ist z. B. in der DE 37 20 224 C2 erläutert. Der metallische Kontakt und damit der Kraftnebenschluß findet im äußeren Durchmesserbereich statt. Im inneren Durchmesserbereich hingegen ist das Gummielement angeordnet, welches nur einen kleinen Weg gestaucht wird und damit im wesentlichen kraftentlastet ist. Bei diesem Dichtungstyp sind daher der dichtende Gummianteil und der tragende Metallanteil parallel zueinander geschaltet.

Gummi und elastomere Kunststoffe mit gummiähnlichem Verhalten sind grundsätzlich hervorragende Dichtstoffe. Denn diese Materialien passen sich den Unebenheiten und Rauhigkeiten der Flanschoberflächen sehr gut an. Sie zeichnen sich ferner durch eine äußerst geringe Querschnittsleckage aus, da die Gasdurchlässigkeit für die meisten Medien sehr niedrig ist. Außerdem erfordert Gummi wegen der Mindestflächenpressung von 1 bis 2 N/mm² nur geringe Anfangsdichtkräfte.

Der Werkstoff Gummi weist allerdings auch einige Nachteile auf, die seine Anwendbarkeit als Dichtung einschränken können. So ist Gummi ein mechanisch nur niedrig belastbarer Werkstoff mit Flächenpressungen von höchstens 15 N/mm² bis 20 N/mm². Des weiteren ist der Werkstoff Gummi zwar gut verformbar, aber nahezu inkompressibel.

Der Erfindung liegt die **Aufgabe** zugrunde, eine Dichtung und insbesondere Flanschdichtung für Flanschverbindungen an Rohrleitungen oder Apparaten zu schaffen, die sich durch eine hohe Belastbarkeit bei günstigem Formänderungsverhalten auszeichnet.

Zur **Lösung** dieser Aufgabe wird bei einer Dichtung mit den eingangs genannten Merkmalen vorgeschlagen, daß die Verstärkung ein in das Material des Grundkörpers vorzugsweise durch Vulkanisieren eingebetteter Wellring ist, und daß das Material des Grundkörpers die Wellentäler des Wellringes vollständig ausfüllt und die Wellenberge vollständig überdeckt.

Mit der Erfindung wird also der Lösungsweg beschritten, den Gummi bzw. das Kunststoff-Elastomer mittels Begrenzungen durch die verstärkende Einlage zu kammern. Die Kammern werden durch sich abwechselnde Täler und Berge gebildet, wie sie beispielsweise typisch für einen Wellring sind. Die so gebildeten, im wesentlichen konzentrischen oder spiralförmigen Kammern bilden umlaufende Begrenzungen, infolge deren es dem elastomeren Material des Grundkörpers nicht möglich ist, eine nennenswerte Formänderung in radialer Richtung durchzuführen. Das Material kann daher nicht "ausweichen", wie es ansonsten für Gummi aufgrund seiner Verformbarkeit, aber Inkompressibilität typisch ist. Die Inkompressibilität des Gummis in Verbindung mit der Kammerung durch die Wellentäler und Wellenberge führt zu einer hohen Belastbarkeit durch die Schrauben, ohne daß es, da die Wellenberge vollständig von dem Material des Grundkörpers überdeckt sind, zu einem Kontakt mit den Dichtflächen kommen kann. Die Belastbarkeit der Dichtung ist daher um ein Vielfaches höher als bei einer ungekammerten elastomeren Dichtung.

In Bezug auf die Überdeckung der Wellenberge wird gemäß einer bevorzugten Ausgestaltung vorgeschlagen, daß das infolge der Überdeckung der Wellenberge zusätzlich gebildete Materialvolumen 20 % bis 50 % des Materialvolumens des Grundkörpers beträgt.

Der erfindungsgemäß verwendete Begriff "Wellring" ist nicht dahingehend einschränkend zu verstehen, daß Wellentäler und Wellenberge ähnlich einer Sinusfunktion gleichsam kontinuierlich ineinander übergehen. Auch eine mehr eckige Gestaltung des Wellrings ähnlich einer Mäanderform ist denkbar und führt in gleicher Weise zu der gewünschten Kammerung des eingeschlossenen Materialvolumens.

Vorteilhafte Ausgestaltungen der erfindungsgemäßen Dichtung sind in den Unteransprüchen angegeben.

Im nachfolgenden werden weitere Vorteile und Einzelheiten anhand von Ausführungsbeispielen erläutert, die auf der Zeichnung dargestellt sind. Darin zeigen:
- Fig. 1: die Anordnung einer aus Gummi und einer verstärkenden Einlage bestehenden Dichtung zwischen den Dichtflächen zweier zu verbindender Flansche einer Rohrleitung;
- Fig. 2: einen Teilschnitt durch eine Dichtung, wobei diese einen aus dem Material des Grundkörpers herausragenden äußeren Randabschnitt aufweist;
- Fig. 3: eine weitere Ausführungsform einer erfindungsgemäßen Dichtung mit einem inneren Dichtwulst und
- Fig. 4: eine weitere Ausführungsform einer erfindungsgemäßen Dichtung mit inneren Dichtlippen.

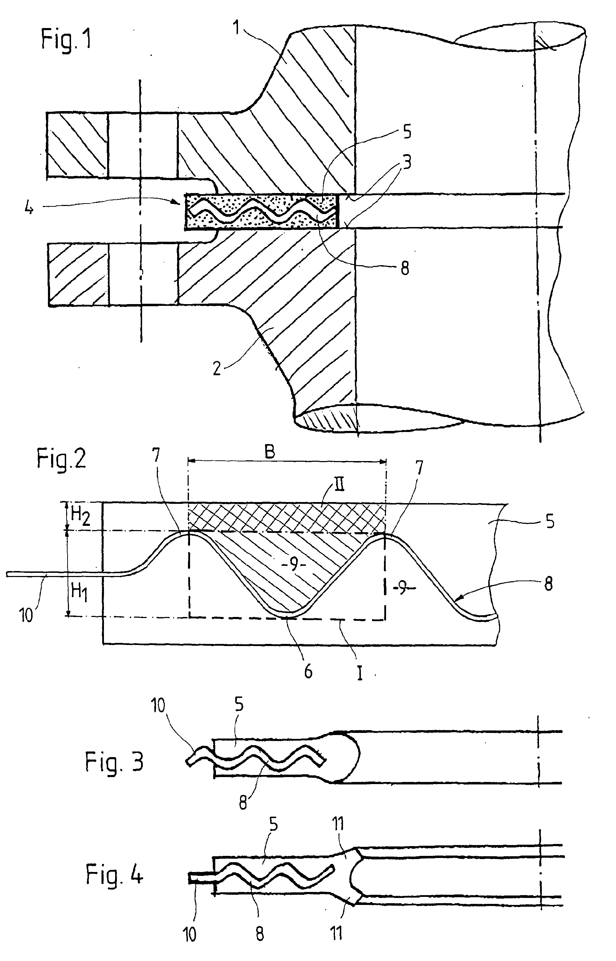

Fig. 1 läßt in Schnittdarstellung als Bestandteile einer Gasleitung einen ersten Flanschring 1, einen zweiten Flanschring 2 und eine zwischen Dichtflächen 3 der Flanschringe 1, 2 angeordnete, insgesamt ringförmige Dichtung 4 erkennen. Die Dichtflächen 3 der Flanschringe 1, 2 sind vollständig eben, d. h. es sind in den Dichtflächen keine Vertiefungen oder dergleichen vorgesehen, z. B. um die Dichtung darin in ihrer Lage zu zentrieren.

Bei den Ausführungsformen nach den Fig. 1 und 2 besteht die Dichtung 4 aus einem Grundkörper von beispielsweise rechteckigem Querschnitt. Aber auch ein länglich-ovaler Querschnitt ist denkbar. Das Material 5 des Grundkörpers ist Gummi oder ein elastomerer Kunststoff, der ein ähnliches Formänderungsverhalten wie Gummi aufweist. Dieses Verhalten ist durch eine gute Verformbarkeit bei nahezu inkompressiblem Druckverhalten gekennzeichnet.

In den Grundkörper 5 eingebettet ist eine Verstärkung. Diese besteht aus einem geformten Element aus Metall, Keramik oder einem steifen Kunststoff mit in radialer Richtung aufeinanderfolgenden, konzentrischen oder spiralförmig angeordneten Wellentälern 6 und Wellenbergen 7. Beim Ausführungsbeispiel wechseln sich Wellentäler und Wellenberge bei Betrachtung in radialer Richtung ähnlich wie bei einer Sinusfunktion ab. Es entsteht also die Gestalt eines Wellrings 8 mit abwechselnd nach oben und unten weisenden Kammern 9. Jedoch sind auch kantigere Gestaltungen des Wellrings möglich, solange die in Fig. 2 gut erkennbare Kammerung gewährleistet ist.

Die wellringförmige Verstärkung ist in das Material des Grundkörpers 5 durch Vulkanisieren eingebettet. Die Wellentäler 6 sind daher vollständig durch das Material des Grundkörpers ausgefüllt, über die gesamte radiale Breite der Verstärkung liegt der Gummi bzw. der elastomere Kunststoff des Grundkörpers daran flächig an, ohne daß Hohlräume bestehen bleiben.

Insbesondere Fig. 2 läßt ferner erkennen, daß das Material des Grundkörpers 5 auch die Wellenberge 7 vollständig überdeckt. Es entsteht ein Volumen 1, welches die durch die Wellentäler 6 definierten Kammern 9 vollständig ausfüllt, sowie ein weiteres Volumen II, welches die materialmäßige Überdeckung darstellt. In dem betrachteten Abschnitt der Breite B wird das fett gestrichelt eingezeichnete Volumen I durch das Produkt B x H₁ und das Volumen II durch das Produkt B x H₂ gebildet. Dieses zusätzlich gebildete Materialvolumen II beträgt etwa 20 % des Materialvolumens 1 des Grundkörpers. Dies entspricht einer Höhe H₂ des überdeckenden Volumens II von mindestens 0,2 mm und vorzugsweise 0,5 mm. Selbstverständlich ist die Gestaltung der Wellenberge und Wellentäler gleichermaßen, sofern die Dichtung von ihrer anderen Flachseite, d. h. von unten aus, betrachtet wird. Die Dichtung ist also bezüglich der Mittelebene des Wellrings 8 symmetrisch gestaltet.

Bei der Ausführungsform nach Fig. 1 weisen der Grundkörper 5 und der Wellring 8 im wesentlichen den gleichen Innendurchmesser und Außendurchmesser auf.

Bei den Ausführungsformen nach den Fig. 2 bis 4 hingegen ist der Außendurchmesser des Wellrings 8 größer als der Außendurchmesser des Grundkörpers 5. Der Wellring 8 besitzt einen Randabschnitt 10, welcher am Außenrand des Grundkörpers 5 aus diesem austritt, also nicht durch das Material des Grundkörpers ummantelt ist. Der Randabschnitt 10 kann dazu herangezogen werden, die Dichtung zwischen den Dichtflächen 3 in geeigneter Weise zu zentrieren, für welche Zentrierung sich das metallische Material des Wellrings besser eignet, als das Dichtungsmaterial des Grundkörpers. Gemäß den Fig. 2 und 4 kann der Randabschnitt des ansonsten profilierten Wellrings 8 flach gestaltet sein.

Bei der Ausführungsform nach Fig. 3 ist der innere Bereich des Grundkörpers 5 zum Innenrand hin um 20 % bis 40 % gegenüber dem übrigen Grundkörper ähnlich einem O-Ring verdickt. Auf diese Weise wird ein zusätzlicher Dichtbereich gebildet.

Bei der Ausführungsform nach Fig. 4 hingegen besteht dieser zusätzliche Dichtbereich anstelle eines O-Rings aus zwei am Innenrand angeordneten, zueinander symmetrischen und nach innen aufgespreizten Dichtlippen 11.

### Bezugszeichenliste

- 1: Flanschring
- 2: Flanschring
- 3: Dichtfläche
- 4: Dichtung
- 5: Grundkörper
- 6: Wellental
- 7: Wellenberg
- 8: Wellring
- 9: Kammer
- 10: Randabschnitt
- 11: Dichtlippe

- I: erstes Volumen
- II: zweites Volumen
- B: Breite des betrachteten Abschnitts
- H₁: Höhe des Wellrings
- H₂: Höhe der Überdeckung einer Seite

## Patentansprüche

1. Dichtung, insbesondere Flanschdichtung für Flanschverbindungen an Rohrleitungen oder Apparaten, bestehend aus einem Grundkörper (5) aus Gummi oder elastomerem Kunststoff und einer in dem Grundkörper (5) angeordneten Verstärkung,
**dadurch gekennzeichnet,**
**daß** die Verstärkung ein in das Material des Grundkörpers (5) vorzugsweise durch Vulkanisieren eingebetteter Wellring (8) ist, und daß das Material des Grundkörpers (5) die Wellentäler (6) des Wellrings (8) vollständig ausfüllt und die Wellenberge (7) vollständig überdeckt.

2. Dichtung nach Anspruch 1, **dadurch gekennzeichnet, daß** das infolge der Überdeckung der Wellenberge (7) zusätzlich gebildete Materialvolumen II etwa 20 % des Materialvolumens I des Grundkörpers beträgt.

3. Dichtung nach Anspruch 1 oder Anspruch 2, **dadurch gekennzeichnet, daß** der Grundkörper (5) und der Wellring (8) den gleichen Innendurchmesser und Außendurchmesser besitzen.

4. Dichtung nach Anspruch 1 oder Anspruch 2, **dadurch gekennzeichnet, daß** der Grundkörper (5) einen kleineren Außendurchmesser als der Wellring (8) besitzt.

5. Dichtung nach einem der vorangehenden Ansprüche, **dadurch gekennzeichnet, daß** der innere Bereich des Grundkörpers (5) sich zum Innenrand hin um 20 % bis 40 % gegenüber dem übrigen Grundkörper (5) verdickt.

6. Dichtung nach Anspruch 5, **dadurch gekennzeichnet, daß** der Innenrand der Dichtung als Wulst ausgebildet ist, der einen um etwa 40 % gegenüber der übrigen Dicke des Grundkörpers (5) größeren Schnurdurchmesser hat.

7. Dichtung nach Anspruch 5, **dadurch gekennzeichnet, daß** der Innenrand der Dichtung als Lippendichtung mit zwei Dichtlippen (11) ausgebildet ist.

8. Dichtung nach Anspruch 4, **dadurch gekennzeichnet, daß** der Wellring (8) im Bereich eines aus dem Grundkörper (5) austretenden äußeren Randabschnittes (10) flach gestaltet ist.

9. Dichtung nach einem der Ansprüche 1 bis 8, **dadurch gekennzeichnet, daß** die Verstärkung aus Metall besteht.

10. Dichtung nach einem der Ansprüche 1 bis 8, **dadurch gekennzeichnet, daß** die Verstärkung aus einem keramischen Werkstoff besteht.

11. Dichtung nach einem der Ansprüche 1 bis 8, **dadurch gekennzeichnet, daß** die Verstärkung aus einem im wesentlichen steifen Kunststoff besteht.
